Europäisches Patentamt

European Patent Office

Office européen des brevets

(19)

(11) Numéro de publication: **0 105 012**
**A2**

## (12) DEMANDE DE BREVET EUROPEEN

(21) Numéro de dépôt: **83420153.5**

(22) Date de dépôt: **21.09.83**

(51) Int. Cl.³: **F 16 M 9/00**
**D 06 F 49/06**

(30) Priorité: **24.09.82 FR 8216244**

(43) Date de publication de la demande:
**04.04.84 Bulletin 84/14**

(84) Etats contractants désignés:
**CH DE GB IT LI**

(71) Demandeur: **ROBATEL S.L.P.I. Société Anonyme**
**Route de Genève**
**F-69740 Genas(FR)**

(72) Inventeur: **Martin, Michel**
**58 Rue Victor Hugo**
**F-69002 Lyon(FR)**

(72) Inventeur: **Tridon, Max**
**67 Rue Bataille**
**F-69008 Lyon(FR)**

(72) Inventeur: **Pignal, Maurice**
**13 Petit chemin de la Muette**
**F-07100 Annonay(FR)**

(74) Mandataire: **Monnier, Joseph et al,**
**Cabinet Monnier 142-150, Cours Lafayette B.P. 3058**
**F-69393 Lyon Cédex 03(FR)**

(54) Dispositif de machine tournante supportée par une dalle de béton ou analogue.

(57) Dans une machine tournante à axe vertical ou horizontal, telle qu'une essoreuse, comportant une dalle de béton (12), cette dalle (12) est prévue annulaire, elle entoure le corps (1-8) de la machine, lequel lui est rigidement fixé. Elle peut être échancrée latéralement en (12a) pour loger le moteur (6) d'entraînement.

*Fig. 2*

EP 0 105 012 A2

Dispositif de machine tournante supportée par une dalle
de béton ou analogue -

La présente invention a trait aux machines tournant à
grande vitesse, telles que les essoreuses, les centrifugeuses et analogues.

On sait que les machines du genre en question comprennent
en général un panier monté à rotation à l'intérieur d'une
cuve suivant un axe vertical ou horizontal. Ce panier
comporte souvent un moyeu qui s'étend à son intérieur pour
venir se raccorder à l'arbre de la machine en entourant
ainsi l'un au moins des paliers de ce dernier, ce qui
permet de rapprocher ce palier du centre de gravité du
panier chargé. Mais la présence d'un tel moyeu n'est pas
indispensable et comme elle constitue une gêne dans certaines applications, on a également réalisé des machines avec
panier à fond plat.

Comme la charge renfermée par le panier n'est en pratique
jamais parfaitement centrée par rapport à l'axe de celui-ci,
la partie tournante de la machine est soumise à des résultantes centrifuges notables qui provoquent des vibrations
dont l'amplitude peut parfois atteindre des valeurs gênantes.
Un moyen connu pour y parer consiste à monter élastiquement
le bâti de la machine sur un socle massif, par exemple en
béton. On comprend aisément qu'on augmente ainsi dans une
mesure considérable la masse sur laquelle viennent agir les
accélérations centrifuges non équilibrées et que par conséquent l'amplitude des déplacements qu'elles peuvent provoquer
se trouve considérablement réduite de ce fait. Par ailleurs,
afin que les vibrations résiduelles du socle ainsi associé
à la machine ne soient pas transmises au sol de l'atelier,
on réalise ce socle sous la forme d'une dalle qu'on fait
reposer sur des supports élastiques tels que des tampons de
caoutchouc ou des ressorts.

Cette disposition connue présente toutefois un inconvénient
notable. En effet, la dalle de béton qui constitue le socle se trouve obligatoirement au-dessous de la machine, c'est-à-dire à une distance notable du ou des plans dans lesquels se situent les forces centrifuges de déséquilibre qui agissent sur l'arbre de celle-ci et, par son intermédiaire, sur la pivoterie et sur l'ensemble du bâti. Ces forces déterminent donc des couples importants qui tendent à faire basculer le bâti sur la dalle et qui entraînent de fortes oscillations de celui-ci.

L'invention vise à remédier à cet inconvénient et à permettre de réduire dans une très large mesure les couples de basculement qui apparaissent ainsi entre une machine tournante et la dalle de béton ou autre qui lui est associée.

Conformément à l'invention, la dalle est prévue annulaire, elle entoure la machine qui lui est rigidement fixée et son plan se situe préférablement au niveau de celui des accélérations non équilibrées auxquelles l'équipage tournant de la machine est soumis en fonctionnement.

Suivant une autre caractéristique de l'invention, l'on tire parti de la forme annulaire de la dalle pour associer directement au bâti de la machine des dispositifs inférieurs d'évacuation des produits traités.

Le dessin annexé, donné à titre d'exemple, permettra de mieux comprendre l'invention, les caractéristiques qu'elle présente et les avantages qu'elle est susceptible de procurer :

Fig. 1 est un schéma rappelant la disposition d'une essoreuse ou centrifugeuse à axe vertical montée sur une dalle de béton à la façon connue.

Fig. 2 est une vue avec coupe montrant la disposition de montage suivant l'invention.

Fig. 3 indique très schématiquement des variantes possibles de ce montage.

0105012

3

Fig. 4 montre une machine dont le bâti est prolongé au-dessous de la dalle annulaire pour supporter une chambre inférieure propre à recevoir des récipients collecteurs amovibles.

Fig. 5 indique schématiquement l'application de l'invention à une machine centrifuge à axe horizontal.

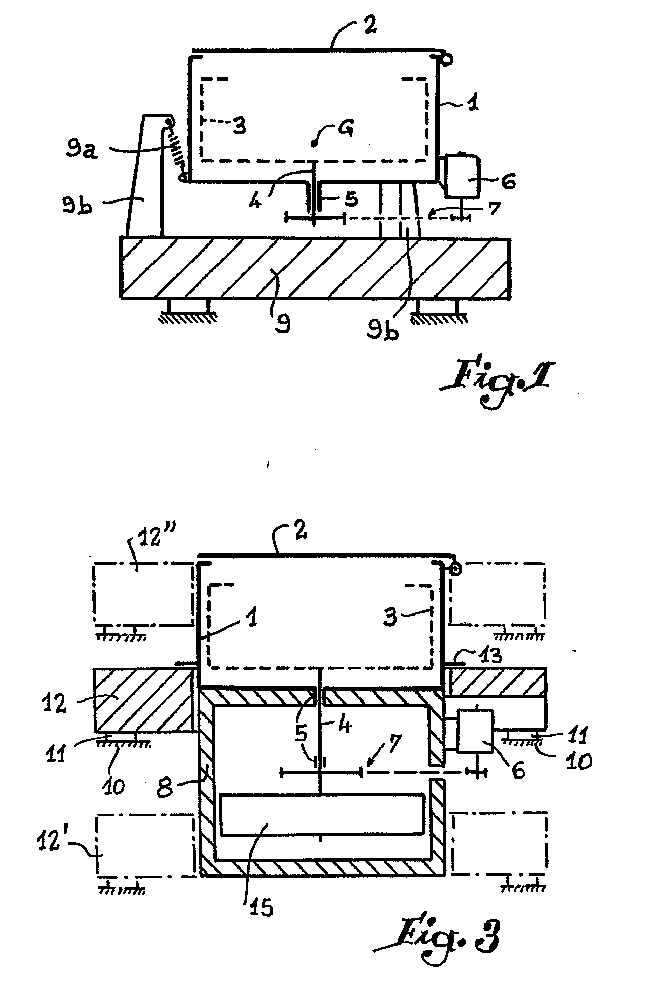

En fig. 1 l'on aperçoit une machine, telle par exemple qu'une essoreuse verticale, comprenant une cuve fixe 1 fermée par un couvercle supérieur 2 et à l'intérieur de laquelle est disposé un panier tournant 3 à fond plat supporté par un arbre 4. Ce dernier est monté dans un dispositif de palier 5 et il est entraîné par un moteur latéral 6 par l'intermédiaire d'un système de poulies et courroie 7. La cuve 1 est suspendue par des ressorts 9a à trois consoles 9b supportées par une dalle inférieure de béton 9, laquelle repose sur le sol 10 par l'intermédiaire de tampons élastiques 11 en caoutchouc ou analogue.

Lorsque la machine tourne à grande vitesse, les inévitables défauts d'équilibrage de la charge du panier 3 déterminent des vibrations que les paliers 5 transmettent à la cuve 1, laquelle les transmet à son tour à la dalle 9. En raison de la masse très importante de cette dernière, les accélérations que ces vibrations représentent ne lui impartissent que des déplacements horizontaux de très faible amplitude que les tampons 11 encaissent aisément par voie élastique. L'inconvénient est que le plan dans lequel les accélérations précitées agissent initialement est pratiquement celui du centre de gravité de l'équipage mobile. Or ce centre se situe un peu au-dessus du fond du panier, donc bien plus haut que la dalle 9, de sorte que les forces correspondant à ces accélérations déterminent par rapport à cette dernière des couples importants qui peuvent entraîner de très fortes oscillations transversales de la cuve 1, l'axe de celle-ci tendant à se déplacer suivant un cône.

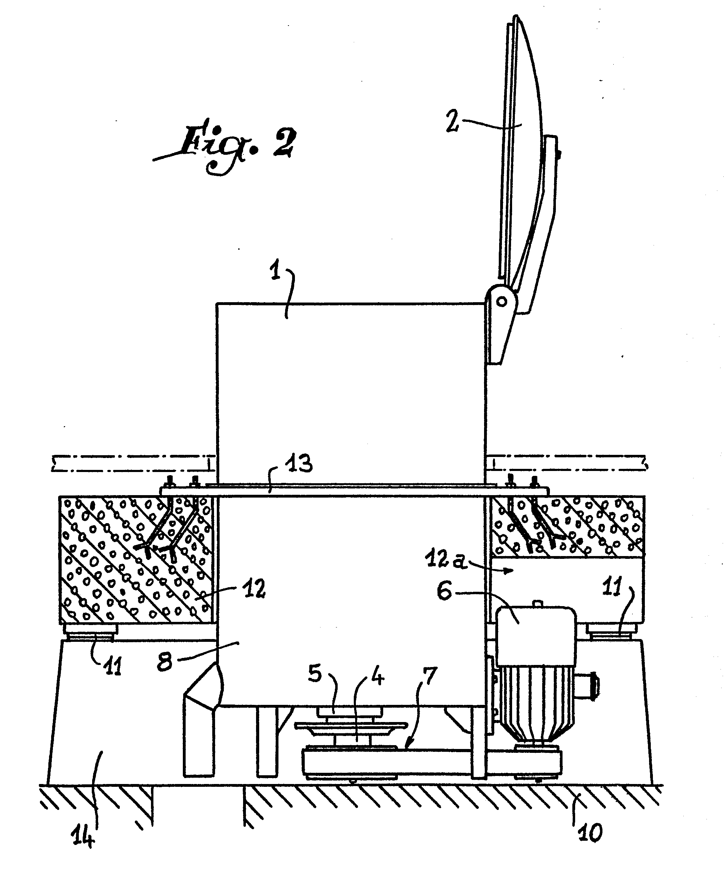

Fig. 2 montre avec davantage de détails une machine montée conformément à l'invention. Ici la cuve 1 est rigidement solidaire d'une jupe inférieure 8 et la dalle de béton, référencée 12, est annulaire ; elle entoure l'ensemble 1-8 de la cuve et de la jupe, et la machine lui est ancrée par le moyen d'une bride entourante 13. Par ailleurs, cette dalle 12 repose par l'intermédiaire des tampons élastiques 11 sur deux murettes 14 prévues de part et d'autre de la machine elle-même et qui reposent à leur tour sur le sol 10.

On comprend qu'avec une telle disposition l'on peut situer le plan horizontal moyen de la dalle 12 substantiellement dans le plan moyen des accélérations centrifuges non équilibrées auxquelles le panier est soumis. Les forces vibratoires que ces accélérations déterminent sont alors directement encaissées par la masse de la dalle sans donner lieu à l'apparition de couples de basculement d'importance notable. De ce fait, à poids de dalle égal à celui de fig. 1, ce montage permet soit de diminuer les efforts dynamiques exercés sur les tampons élastiques et sur les murettes, soit d'admettre des chargements du panier présentant davantage de déséquilibre, ce qui augmente la souplesse d'exploitation de ce type de machine. De même les efforts engendrés dans la partie inférieure de la jupe 8 sont considérablement diminués. Celle-ci peut n'avoir pratiquement rien à supporter, au moins au-dessous de la dalle.

Dans l'exemple représenté, pour permettre de loger le moteur 6 sans avoir à remonter exagérément la dalle 12, on a pratiqué dans celle-ci une entaille locale 12a.

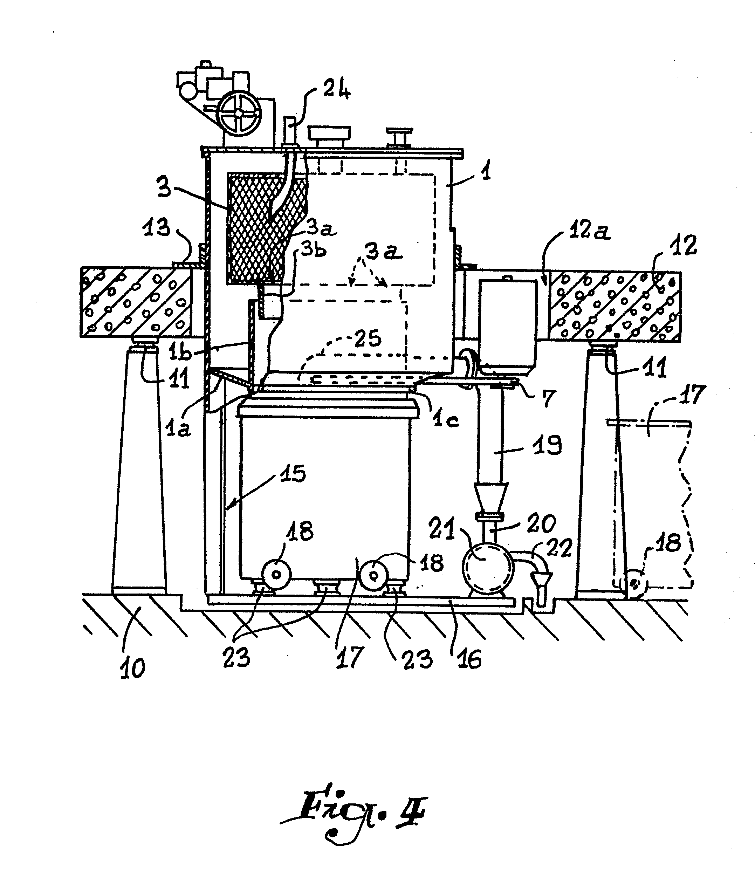

On comprend que si l'on a avantage en général à disposer ainsi la dalle 12 approximativement à mi-hauteur de la machine, cela n'a rien d'obligatoire. Il suffit qu'elle soit surélevée par rapport à la disposition classique de fig. 1 pour qu'on obtienne une diminution de l'importance des couples de basculement gênants. Fig. 3 indique à cet égard trois positions en hauteur de la dalle en question, savoir une première figurée en traits continus en 12 et qui correspond à celle de fig. 2, une seconde 12' située nettement plus bas (mais encore plus haut que la dalle pleine 9 de fig. 1), et enfin une troisième 12" se trouvant dans la partie haute de la machine. La position 12' peut présenter de l'intérêt quand cette machine comporte un volant inférieur tel que 15, ou bien si l'on a volontairement alourdi sa partie basse, comme indiqué par la surépaisseur des parois de cette partie en fig. 3. Quant à la position 12", elle peut se concevoir dans le cas de machines à panier lourdement chargé.

Dans la forme d'exécution de fig. 4 la machine considérée est une essoreuse à axe vertical à fond ouvert. On a profité du caractère annulaire de la dalle 12 pour prolonger la cuve 1 en direction du bas sous la forme d'une chambre 15 fermée par une paroi horizontale inférieure ou plancher 16, mais ouverte latéralement pour permettre l'entrée et la sortie de récipients collecteurs 17 montés sur des roulettes 18. Le panier tournant 3 comporte dans son fond une série d'ouvertures 3a disposées circulairement autour de sa partie centrale (non figurée), l'ensemble de ces ouvertures étant entouré par un manchon co-axial 3b qui dépasse vers le bas. La cuve 1 elle-même comporte un fond tronconique 1a, lequel se raccorde à un autre manchon 1b, orienté vers le haut et qui vient entourer avec jeu le manchon 3b précité. Ce manchon 1b se prolonge quelque peu au-dessous du fond 1a et se termine par une bride 1c équipée d'un joint d'étanchéité, non détaillé.

On aperçoit en 19 une canalisation d'évacuation des liquides, laquelle s'ouvre dans l'espace intermédiaire compris entre le manchon 1b et la paroi de la cuve 1. Cette canalisation se termine par un tube plongeur 20 à l'intérieur d'une petite chambre 21 équipée d'une sortie 22 de façon à jouer le rôle de clapet hydraulique.

Le plancher 16 porte des petits vérins 23 grâce auxquels on peut soulever le récipient 17 se trouvant dans la chambre 15 de manière à appliquer de façon étanche son bord supérieur contre le joint associé à la bride 1c.

Grâce à cet agencement, l'essoreuse peut fonctionner dans une atmosphère déterminée (azote, par exemple), sous une pression juste suffisante pour éviter les rentrées d'air. Pendant l'essorage, les matières à traiter sont appliquées contre la paroi du panier par une tuyère d'alimentation 24, le liquide essoré s'échappant par la canalisation 19 et le clapet hydraulique 21 qui lui est associé. Une fois l'essorage terminé, un racloir (non représenté) détache le gâteau de la paroi du panier pour le faire retomber dans le récipient collecteur 17. On peut ensuite fermer l'amenée d'azote ou autre gaz et détacher le récipient 17 de la bride 1c pour l'évacuer et le remplacer par un récipient vide en vue du cycle opératoire suivant de l'essoreuse. Ce mode de fonctionnement en atmosphère isolée, bien connu en soi dans la technique, se trouve ainsi grandement simplifié.

Pour protéger l'ensemble 7 de poulies et de courroies à l'encontre des morceaux du gâteau retombant dans le récipient 17 on a prévu un écran 25.

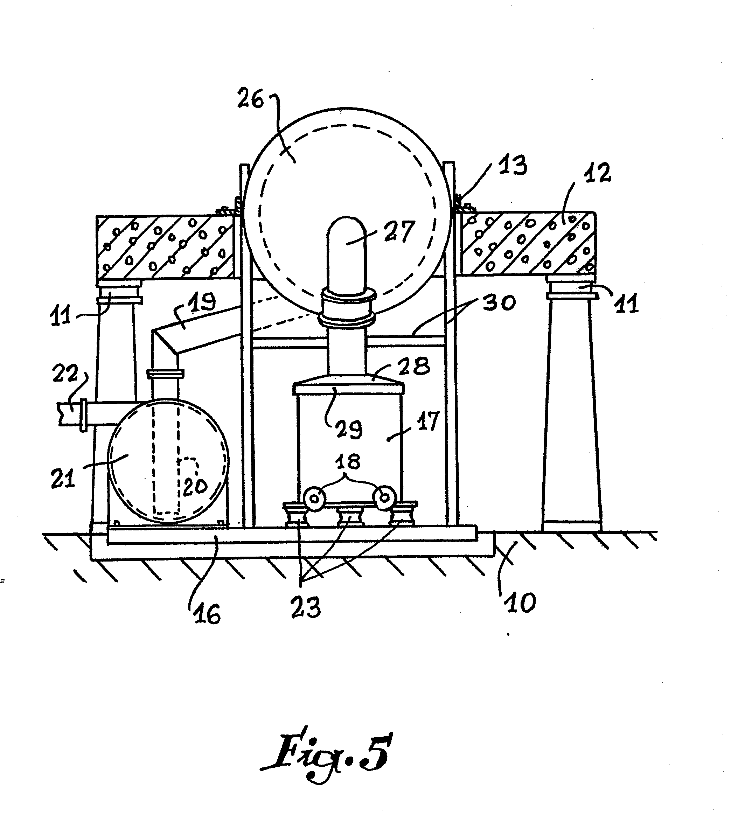

Fig. 5 montre très schématiquement comment on peut appliquer l'invention à une essoreuse à axe horizontal. L'agencement général reste celui de fig. 4, notamment en ce qui concerne la dalle annulaire 12 à laquelle est ancrée la cuve, ici référencée 26. On retrouve la canalisation d'évacuation 19, le tube plongeur 20, la chambre ou clapet hydraulique 21 et la sortie 22. Toutefois, comme dans une essoreuse horizontale le gâteau est raclé de manière que ses débris retombent dans un couloir débouchant à l'extrémité de la machine opposée au système d'entraînement, il n'est pas possible ici d'utiliser des manchons tels que ceux 1b et 3b sus-décrits. Le couloir collecteur des débris du gâteau est relié à une canalisation 27 qui se termine par un chapeau horizontal 28 auquel est associée la bride de raccordement, ici référencée 29. On retrouve là encore le plancher 16 avec les vérins 23, mais comme la cuve 26 est horizontale, on a dû prévoir une charpente 30 pour le relier rigidement à celle-ci. Le fonctionnement reste autrement identique à ce qui a été décrit plus haut.

Revendications

1. Machine tournante du genre des essoreuses, centrifugeuses et analogues, comportant une dalle en béton ou similaire qui supporte le bâti de la machine considérée, caractérisée en ce que cette dalle (12) est annulaire, et entoure la machine qui lui est fixée de façon substantiellement rigide.

2. Machine suivant la revendication 1, du genre à axe vertical, caractérisée en ce que le plan de la dalle (12) se situe substantiellement au niveau de celui des accélérations non équilibrées auxquelles l'équipage tournant de la machine est soumis en fonctionnement.

3. Machine suivant l'une quelconque des revendications 1 et 2, du genre à moteur latéral d'entraînement à axe vertical, caractérisée en ce que la dalle (12) est échancrée sur un côté pour ménager un logement (12a) propre à recevoir ce moteur (6).

4. Machine suivant l'une quelconque des revendications précédentes, caractérisée en ce que son bâti (1) se prolonge au-dessous de la dalle (12) sous la forme d'une chambre (15) propre à recevoir des récipients (17) collecteurs de certains des produits traités sortant par gravité de la machine elle-même.

5. Machine suivant la revendication 4, du genre essoreuse à évacuation du gâteau par le bas et travaillant sous atmosphère contrôlée, caractérisée en ce que la chambre (15) comporte une paroi inférieure horizontale (16) formant plancher et équipée de vérins ou analogues (23) pour soulever le récipient collecteur (17) et appliquer son débouché supérieur en contact étanche avec une bride de liaison (1c, 17) prévue sur l'ouverture d'évacuation du gâteau.

*Fig.1*

*Fig. 3*

*Fig. 2*

Fig. 4

Fig. 5